# EUROPÄISCHE PATENTSCHRIFT

(11) **EP 0 663 804 B1**
(45) Veröffentlichungstag und Bekanntmachung des Hinweises auf die Patenterteilung: **10.07.1996**
(21) Anmeldenummer: 93922922.5
(22) Anmeldetag: 08.10.1993
(51) Int. Cl.: A47J 37/07, A47J 37/06, H05B 3/72, A47B 31/02

(54) **GAR- UND KOCHVORRICHTUNG**
ROSTING AND COOKING DEVICE
DISPOSITIF DESTINE A ROTIR ET A FAIRE CUIRE DES ALIMENTS

(30) Priorität: 08.10.1992 DE 4233940; 09.11.1992 DE 4237759
(43) Veröffentlichungstag der Anmeldung: 26.07.1995
(73) Patentinhaber: SCHACHT, Paul, D-80796 München (DE)
(72) Erfinder: SCHACHT, Paul, D-80796 München (DE)
(74) Vertreter: Reinhard - Skuhra - Weise & Partner
(86) Internationale Anmeldenummer: EP9302757
(87) Internationale Veröffentlichungsnummer: WO9408498

(56) Entgegenhaltungen:
- CH-A- 334 568
- DE-U- 8 204 675
- DE-U- 8 816 255
- DE-U- 9 111 756
- US-A- 2 299 596
- US-A- 3 289 664
- US-A- 3 845 273

## Beschreibung

Die Erfindung betrifft eine Vorrichtung zum Garen und/oder Kochen, die als Einsatz in eine vorhandene Öffnung eines Tisches oder dergleichen oder als Bestandteil eines Tischaufbaus für geselliges Garen, Kochen und Essen vorgesehen ist.

Im Rahmen von geselligem Beisammensein werden häufig Speisen wie Fleisch, Würstchen oder dergleichen durch Grillen zubereitet. Großer Beliebtheit erfreut sich auch das Fleisch- oder Käsefondue, das Raclette-Essen oder das Garen in einem Wok. Dabei ist es üblich, daß an einer zentralen Stelle, die teilweise außerhalb des Eßbereichs liegt, das Garen vorgenommen wird und anschließend die Portionen auf einzelne Teller verteilt und wo anders eingenommen werden. Besonders gemütlich und stimmungsvoll ist es jedoch, wenn Personen gesellig an einem Tisch zusammensitzen, wie beim Fondue-Essen, wobei dann alle zugehörigen Speisen gemeinsam zubereitet und an Ort und Stelle eingenommen werden können.

Aus der DE 91 11 756 U1 ist ein Aufstelltisch für Partyzwecke gemäß dem Oberbegriff des Anspruchs 1 bekannt, bei dem bereits eine Tischplatte aus Stahl vorgesehen ist, welche in ihrem Zentralbereich mittels einer Gasflamme beheizbar ist, wobei die Tischplatte in der Tischmitte eine permanent eingeformte Mulde besitzt, von deren Rand sich die Tischplatte ohne Wölbung radial nach außen erstreckt. Zur Kühlung des Randbereichs sind radiale Wärmeausdehnungsschlitze vorgesehen, damit der Randbereich der Tischplatte zwischen den Wärmeausdehnungsschlitzen eine verwerfungsfreie Ausdehnbarkeit erreicht. Für einen optisch gefälligen Tischplattenrandabschluß sind zweckmäßig aus Holz gefertigte profilierte Randleisten mit entsprechendem Spiel vorgesehen, die zum Säubern der Tischplatte einfach demontierbar und wieder anbringbar sind. Die vorhandenen Wärmeausdehnungsschlitze führen nicht nur dazu, daß kein geschlossenes Erscheinungsbild des Tischaufbaus erreicht wird, sondern bergen auch die Gefahr, daß Speisen, Bratensaucen, Fett und dergleichen in unerwünschter Weise hindurchtreten und zu Verschmutzungen führen können. Die randseitig aufsteckbaren Profile sind auch in ihrer Handhabung bei der Reinigung des Tisches ungünstig.

Der Erfindung liegt die Aufgabe zugrunde, eine Vorrichtung zum Garen und/oder Kochen verfügbar zu machen, bei der im Bereich des Plattenrandes sitzende Personen unbeeinträchtigt von einer Hitzeeinwirkung und von Bratensaucen, Fett und dergleichen an ihrem jeweiligen Eßplatz das Essen genießen können.

Erfindungsgemäß wird diese Aufgabe durch die im Patentanspruch 1 genannten Merkmale gelöst. Bevorzugte Merkmale, die die Erfindung vorteilhaft weiterbilden, sind in den nachgeordneten Patentansprüchen genannt.

Erfindungsgemäß macht somit die Erfindung eine Vorrichtung verfügbar, die als Einsatz in eine vorhandene Öffnung eines Tisches oder dergleichen oder als Bestandteil eines Tischaufbaus einsetzbar ist. Das Vorsehen der Tischplatte in Form einer Edelstahlplatte hat den Vorzug, daß aufgrund der schlechten Wärmeleiteigenschaften von Edelstahl die Einnahme von Speisen durch Personen möglich wird, die um die Vorrichtung herum sogar auch ihre Teller und Gläser im Randbereich stellen können. Ungünstige Wärmeausdehnungsschlitze sind aufgrund der hierdurch realisierbaren Temperaturbedingungen überflüssig. Günstig ist weiterhin, daß die durch die Erhitzung der Edelstahlplatte hervorgerufene Wärmedehnung derselben gezielt durch ein geschlossenes Einfassen und damit Einspannen des Edelstahlprofil in der Weise kontrolliert wird, daß die Edelstahlplatte sich nicht radial ausdehnt, sondern gezielt eine axiale gleichmäßige und wellenfreie Verformung erfährt, die sich praktisch gleichförmig vom Rand bis zur Plattenmitte erstreckt und durch das Eigengewicht des Materials nach unten gerichtet zur Bildung einer gleichmäßigen muldenartigen Verformung über die gesamte Tischplatte führt. Hierdurch wird wirksam verhindert, daß Bratensaucen, Fett und dergleichen zum Rand der Edelstahlplatte und gegebenenfalls in den Bereich der Eßplätze der einzelnen Personen strömt. Hinzu kommt vorteilhaft der für Edelstahloberflächen bekannte Effekt einer einfachen problemlosen Reinigung nach Gebrauch.

Bei der Ausgestaltung der Vorrichtung als Bestandteil eines Tischaufbaus kann durch das einspannende Versteifen des Randes die Wärmeausdehnung der Tischplatte derart kontrolliert werden, daß sich in günstiger Weise im mittleren Bereich der Tischplatte gezielt aus einer durch Eigengewicht vorgesehenen Auswölbung, die im kalten Zustand etwa 2 mm beträgt, eine Mulde von bis zu etwa 25 mm gleichmäßig statt unkontrollierter welliger Verformungen bildet.

Die muldenartige Verformung nach unten kann zusätzlich zur Randeinspannung der Tischplatte durch das Eigengewicht einer unterseitig an der Edelstahlplatte hängend befestigten Heizeinrichtung begünstigt werden, wobei gemäß einer bevorzugten Ausgestaltung als Tischaufbau die tragende Befestigung der Tischplatte an dem Beinabschnitt über eine radial außerhalb der nur an der Platte hängenden Heizeinrichtung wirksame Abstützung mittels eines tragenden Gehäuses erfolgt.

Das randseitige Edelstahlprofil ist bevorzugt an der Edelstahlplatte angeformt und weist vorzugsweise wenigstens eine einfache Abkantung nach unten auf. Alternativ besteht das randseitige Edelstahlprofil aus einem separaten Metallprofil mit einem vorzugsweise geschlossenen Querschnitt, das bevorzugt außermittig an den Rand der Edelstahlplatte angeschweißt ist. Die Anschweißung ist dabei vorteilhaft aus Gründen einer leichteren Bearbeitbarkeit außermittig derart vorgenommen, daß der größere Teil des Rohrquerschnitts unterhalb der Edelstahlplatte liegt, deren Stärke etwa 1/5 bis 1/2 der Höhe des Edelstahlprofils beträgt. Da das Metallprofil ebenfalls aus Edelstahl besteht, ergibt sich vorteilhaft ein gleichmäßiges geschlossenes Erscheinungsbild.

Die unterseitige Aufheizung des mittleren Bereichs der Platte kann durch jede geeignete Heizeinrichtung vorgenommen werden. Gemäß einer bevorzugten Ausgestaltung der Erfindung ist als Heizeinrichtung eine Strahlungsquelle vorgesehen, die auf den vorzugsweise geschwärzten mittleren Bereich der Platte gerichtet ist. Die Schwärzung im mittleren Bereich dient dabei vorteilhaft der Verbesserung der Wärmeaufnahme und -verteilung. Gemäß einer bevorzugten alternativen Ausgestaltung der Erfindung ist wenigstens ein wärmeverteilendes plattenförmiges Element vorgesehen, das im mittleren Bereich der Platte unterseitig befestigt ist und vorzugsweise aus Kupfer besteht. Die Form der Kupferplatte entspricht dabei der des beheizten mittleren Bereichs und ist bevorzugt kreisförmig. Mehrere wärmeleitende nebeneinander liegende Elemente sind mit Dehnungsspiel relativ zueinander und bezüglich ihrer Montage befestigt. Nach einer bevorzugten Ausgestaltung der Erfindung für die Befestigung des/der wärmeleitenden Elemente auf die Unterseite der Platte aufgeschossene Schraubbolzen vorgesehen sind. Die aus Kupfer bestehenden wärmeleitenden Elemente besitzen bevorzugt einen rechteckigen Querschnitt und bilden längliche rechteckige, quadratische oder kreisabschnittförmige Plattensegmente, die zwischen sich Dehnfugen aufweisen, wobei für ihre Befestigung Bohrungen mit einem großen Durchmesser vorgesehen sind, um wärmebedingte Dehnungen spannungsfrei berücksichtigen zu können.

Als Heizeinrichtung ist gemäß einem bevorzugten Ausführungsbeispiel der Erfindung eine elektrische Heizeinrichtung mit einem Rohrheizkörper oder einer Heizfolie, Regler und Thermostat vorgesehen, wobei vorzugsweise der Rohrheizkörper als Flachrohrheizkörper ausgebildet ist, der spiralförmig direkt auf den plattenförmigen wärmeleitenden Elementen befestigt ist.

Zur Befestigung des Flachrohrheizkörpers dienen bevorzugt auf die Platte aufgeschossene Schraubbolzen, die mit Spiel durch Bohrungen des bzw. der wärmeleitenden Elemente greifen, bevorzugt durch Spiralzwischenräume und durch gegebenenfalls stegförmige wärmeleitende Halteelemente, die mit einer Befestigungsmutter beaufschlagt sind. Alternativ ist für eine einzige Kupferplatte mit spiralförmigem Flachrohrheizkörper eine mittig und/oder randseitig aufgeschraubte Metallhalteplatte vorgesehen.

Hierdurch ergibt sich eine Konfiguration der elektrischen Heizeinrichtung, bei der eine gute Wärmeverteilung über den gesamten Heizbereich gewährleistet ist, wobei gleichzeitig temperaturbedingten Ausdehnungen in idealer Weise nötiges Spiel eingeräumt wird, auch im Bereich der Flachrohrheizkörper selbst.

Die elektrische Heizeinrichtung ist nach einer bevorzugten weiteren Ausgestaltung der Erfindung in einem an der Unterseite der Platte befestigten Gehäuse wärmeisoliert angeordnet, wobei das Gehäuse bevorzugt über Befestigungsschellen an aufgeschossenen Schraubbolzen montierbar ist, und wobei das Gehäuse bevorzugt Glaswolle zum Isolieren sowie ein Isoliervlies im Bereich der Gehäusewand als Isoliermatte aufweist.

Das unmittelbar hängend nur an der Unterseite der Platte befestigte Heizeinrichtungsgehäuse ist von einem stabilen, ebenfalls an der Unterseite der Platte befestigten, tragenden Gehäuse beabstandet umgeben, an dem, bei Ausbildung als Tischaufbau, vorzugsweise parallel zur Platte bzw. Tischplatte, der Beinabschnitt angreift. Damit erfolgt eine Kraftübertragung vom Beinabschnitt auf die Platte außerhalb des zentralen Beheizungsbereichs, was die oben angesprochene Muldenbildung fördert.

Das tragende Gehäuse besteht aus einem stabilen Blech und weist eine elektrische Steuer- und Kontrolleinrichtungen für die Heizeinrichtung auf. Der parallel zur Platte verlaufende Abschnitt des Gehäuses ist ebenfalls plattenförmig ausgebildet und, bei Ausbildung als Tischaufbau, mit dem Beinabschnitt, beispielsweise durch Verschweißen, verbunden.

Gemäß einer alternativen Ausgestaltung der Erfindung ist eine mit Gas arbeitende Heizeinrichtung mit Regler und Thermostat vorgesehen, welche bevorzugt einen zentralen und/oder ringförmigen Brenner aufweist, der von den plattenförmigen wärmeleitenden Elementen beabstandet an der Unterseite der Platte über aufgeschossene Schraubbolzen befestigt ist. Auch bei dieser Ausgestaltung ist die Gasheizeinrichtung von einem stabilen an der Unterseite der Platte befestigten tragenden Gehäuse beabstandet umgeben, an dem, bei der Ausbildung als Tischaufbau, der Beinabschnitt angreift und in/an dem Steuer- und Kontrolleinrichtungen angeordnet sind.

Zur einfachen haltenden Montage der erfindungsgemäßen Vorrichtung ist gemäß einer bevorzugten weiteren Ausgestaltung der Erfindung vorgesehen, daß das geschlossene Metallprofil eine axiale Haltefläche für die Abstützung auf einer wenigstens abschnittsweise in einer passenden Aufnahmeöffnung einer größeren Platte oder dergleichen gebildeten Schulter aufweist. Alternativ ist als Schutz gegen seitliches Austreten von Gar- und Kochprodukten in günstiger Weise vorgesehen, daß an dem geschlossenen Metallprofil, das die Platte umgibt ein umlaufendes Halteprofil angeformt oder befestigt ist, das vorzugsweise einen umlaufenden eingeformten Wulst oder eine eingeformte Rinne und einen umlaufenden Halterand für das randseitige Einhängen in eine passende Aufnahmeöffnung einer größeren Platte oder dergleichen aufweist.

Die Vorrichtung ist in einer bevorzugten Ausgestaltung zur Bildung eines Tischaufbaus zum geselligen Garen, Kochen und Essen einsetzbar, wobei die Platte in vergrößerter Gestaltung eine Tischplatte bildet und wobei ein Beinabschnitt mit einem Fußabschnitt in einem Bereich zwischen Plattenrand und Heizeinrichtungsrand an der Platte befestigt ist.

Auf der Tischplatte sind vorzugsweise Zonen verschiedener Temperatur gekennzeichnet, wobei vorzugsweise eine zentrale Garzone, eine ringförmige Übergangszone und eine sich radial davon anschließende ringförmige Eßzone gebildet sind. Zur Kennzeichnung jeder Zone ist vorteilhaft eine Leuchtbandanzeige, eine Gradanzeige und/oder eine Flüssigkristallanzeige, insbesondere für Temperaturkurven, vorgesehen, vorzugsweise die Flüssigkristallanzeige auch als optische Anzeige für nicht mit der Temperatur zusammenhängende Informationen, wie Rezepte, Uhrzeit, Datum etc., vorgesehen sein kann. Alternativ kann auch eine separate optische Anzeige für nicht mit der Temperatur zusammenhängende Informationen vorgesehen sein.

Die Platte der Vorrichtung kann rund, eckig, oval usw. ebenso wie die Tischplatte bei einem Einsatz der Vorrichtung in derselben ausgebildet sein. Dabei ist es günstig, wenn die Plattenform an die Tischplattenform angepaßt ist. Der Tischaufbau ist hinsichtlich der Tischplatte, des Beinabschnitts und des Fußabschnitts nahezu beliebig gestaltbar. Der Beinabschnitt kann wenigstens ein hohles Stützprofil aufweisen, das zentral unterhalb der Mitte des Tisches angeordnet ist. Alternativ kann das Stützprofil auch einen großen Durchmesser haben, um einen Aufnahmeraum, insbesondere für eine Gasflasche und/oder einen integrierten Kühlschrank zu bilden. Darüberhinaus ist für die Gestaltung des Beinabschnitts auch eine säulenförmige Konzeption oder jede andere bekannte beinförmige Abstützung verwendbar.

Gemäß einer bevorzugten weiteren Ausgestaltung der Erfindung besitzt der Beinabschnitt eine Höhenverstelleinrichtung, um ihn an die jeweiligen Gegebenheiten, insbesondere an die optimale Essenseinnahme und Zubereitungshöhe der beteiligten Personen, anpassen zu können.

Der Beinabschnitt kann vorzugsweise lösbar an dem stabilen tragenden Gehäuse angebracht sein, um den Tischaufbau bei Nichtgebrauch platzsparend wegstellen zu können. In gleicher Weise kann auch der Fußabschnitt lösbar an dem Beinabschnitt angebracht sein. Die vorgesehene lösbare Anbringung des Beinabschnitts und des Fußabschnitts ist zudem auch im Hinblick auf Transport und Verpackung vorteilhaft.

Der Fußabschnitt kann nach einer bevorzugten weiteren Ausgestaltung einteilig und massiv oder mit wenigstens drei gleichmäßig voneinander beabstandeten Füßen ausgebildet sein und zweckmäßigerweise eine Höhenjustiereinrichtung aufweisen. Überdies kann vorteilhaft in dem Fußabschnitt auch ein elektrischer Anschluß bzw. ein Gasanschluß vorgesehen sein, um Heizenergie durch den hohlen Beinabschnitt verdeckt zu der Heizeinrichtung zuführen zu können.

Gemäß einer weiteren bevorzugten Ausgestaltung der Erfindung gehört zu dem Tischaufbau eine elektrische Abzugshaube, die auf der Tischplatte oder auf einem separaten Fuß befestigt ist und die sich wenigstens über den mittleren Bereich der Tischplatte erstreckt, unter dem die Heizeinrichtung befestigt ist. Hierdurch können in günstiger Weise Gargerüche entfernt werden, wobei die Abzugshaube für Umluftbetrieb mit einem Aktivkohlefilter und oberseitigem Luftauslaß und für den Abluftbetrieb mit einem oberseitigen Rohrstutzen für einen Abluftschlauch oder dergleichen versehen ist.

Weitere Einzelheiten, Merkmale und Vorteile der Erfindung sind dem anschließenden Beschreibungsteil zu entnehmen, in dem Ausführungsbeispiele der Erfindung unter Bezugnahme auf die beigefügten Zeichnungen näher erläutert werden. Es zeigen:
- Fig. 1: eine halbgeschnittene Seitenansicht eines Ausführungsbeispiels einer erfindungsgemäßen Vorrichtung;
- Fig. 2: eine Unteransicht der Vorrichtung mit verschiedenen Schnitten, wobei das äußere Halteprofil weggelassen ist;
- Fig. 3: eine vergrößerte Darstellung einer elektrischen Heizeinrichtung;
- Fig. 4: eine halbgeschnittene Seitenansicht eines Ausführungsbeispiels als Tischaufbau;
- Fig. 5: eine Draufsicht auf ein weiteres Ausführungsbeispiel eines Tischaufbaus mit quadratischer Tischplatte; und
- Fig. 6: einen schematisierten Schnitt entlang der Schnittlinie V-V in Fig. 4.

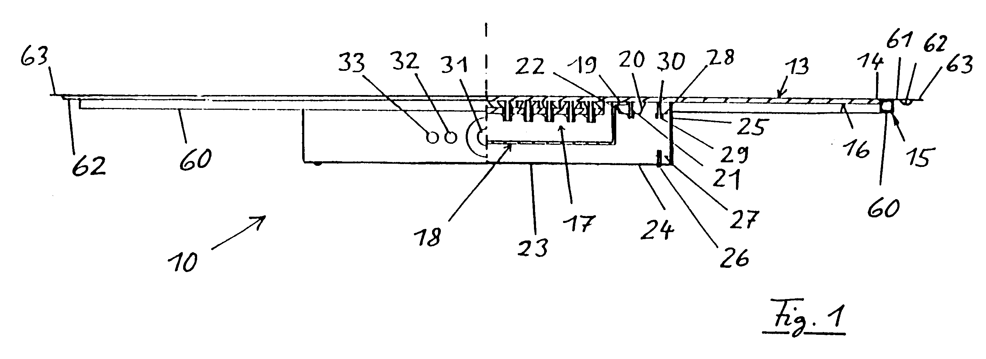

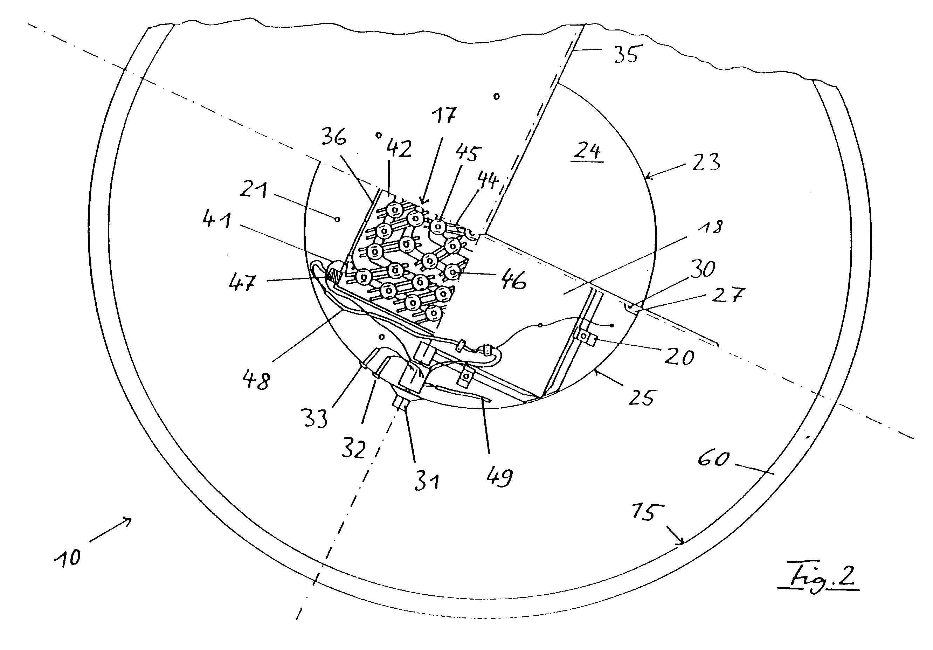

In den Fig. 1 und 2 ist eine Vorrichtung 10 gezeigt, die eine Platte 13 aus Edelstahl aufweist. Die Platte 13 ist kreisförmig ausgebildet und besitzt einen umlaufenden Rand, an dem ein hohles geschlossenes quadratisches Edelstahlprofil 15 außermittig angeschweißt ist. Das Profil 15 bildet für die Platte 13 eine saumförmige Begrenzung, wobei die Profilmitte unter der Unterseitenfläche 16 der Platte 13 liegt. Die Dicke der Platte 13 beträgt etwa 5 mm und der äußere Durchmesser des Profils 15 beträgt etwa 25 mm.

Radial ist an dem metallischen Profil eine axiale Haltefläche 60 für die Abstützung auf einer nicht dargestellten Schulter vorgesehen, die wenigstens abschnittsweise in einer passenden Aufnahmeöffnung einer größeren Platte oder dergleichen gebildet ist. Alternativ oder zusätzlich ist an dem Profil 15, das die Platte 13 umgibt, ein umlaufendes Halteprofil 61 angeformt oder befestigt, das einen umlaufenden eingeformten Wulst oder, wie in Figur 1 angedeutet, eine eingeformte Rinne 62 und einen umlaufenden Halterand 63 für das randseitige Einhängen in eine passende Aufnahmeöffnung einer größeren Platte oder dergleichen aufweist.

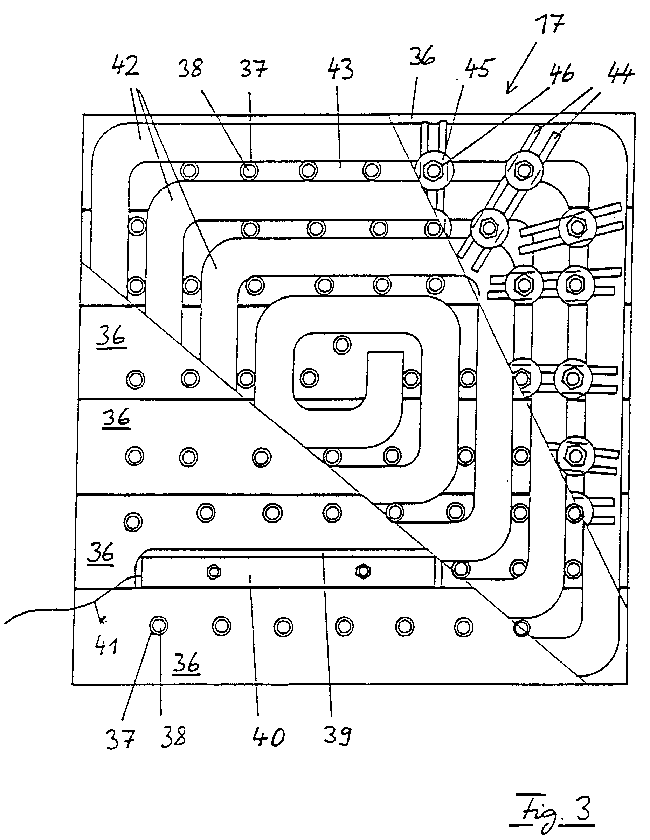

Im mittleren Bereich der Platte 13 ist eine Heizeinrichtung 17 angeordnet, zu deren Aufbau Näheres den Fig. 2 und 3 zu entnehmen ist. Die Heizeinrichtung 17 ist von einem Gehäuse 18 umgeben, das einen umgebördelten Anlagerand 19 besitzt, der mittels Befestigungsschellen 20 an der Unterseitenfläche 16 der Platte 13 befestigt ist. Zur Befestigung weist die Unterseitenfläche 16 Schraubbolzen 21 auf, die elektrisch aufgeschossen sind und durch die Befestigungsschelle 20 treten. Eine Mutter 22 ist auf die Schraubbolzen aufgeschraubt und hält über die Befestigungsschelle den Anlagerand 19 fest an der Unterseitenfläche 16 der Platte 13.

Das Heizeinrichtungsgehäuse 18 ist aus einem Stück hergestellt. Der Raum zwischen dem Heizeinrichtungsgehäuse 18 und der Heizeinrichtung 17 ist zu Isolierzwecken mit Glaswolle in nicht dargestellter Weise gefüllt, wobei im Bereich der Wand des Heizeinrichtungsgehäuses 18 zusätzlich eine Isoliermatte bzw. ein Isoliervlies angeordnet ist.

Umgeben wird das Heizeinrichtungsgehäuse 18 von einem Gehäuse 23, das aus einem parallel zur Tischplatte 13 verlaufenden Abschnitt 24 und aus einem senkrecht dazu verlaufenden Abschnitt 25 aufgebaut ist. Das Gehäuse 23 besteht aus Blech. Der Abschnitt 24 ist über Schrauben 26 mit einer Gewindelasche 27 verbunden, und der Abschnitt 25 ist seinerseits über eine eine Bohrung aufweisende Laschen 28 an der Unterseitenfläche 16 der Platte 13 durch Festschrauben einer Mutter 29 auf Schraubbolzen 30 befestigt, welche auf die Unterseitenfläche 16 der Platte 13 aufgeschossen sind.

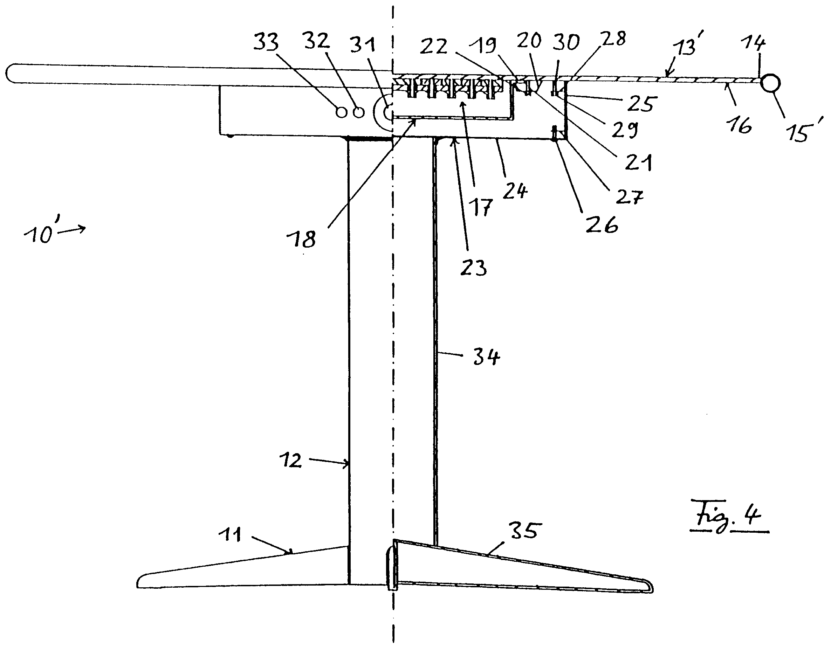

Der Abschnitt 25 enthält einen Regelknopf 31 für die elektrische Heizeinrichtung 17, eine Betriebsspannungsanzeige 32 sowie eine Thermostatsbetriebsanzeige 33. Im mittleren Bereich des Abschnitts 24 des Gehäuses 23 ist bei dem in Fig. 4 gezeigten Ausführungsbeispiel ein Rohrprofil 34 angeschweißt, das den Beinabschnitt 12 bildet. In dem Rohrprofil 34 ist in nicht dargestellter Weise eine elektrische Anschlußleitung untergebracht, die im Bereich des Fußabschnitts 11 nach außen geführt ist. Der Fußabschnitt 11 weist vier Füße 35 auf, die an dem unteren Ende des Rohrprofils 34 radial nach außen weisend angeschweißt sind. Die Füße 35 bilden untereinander einen Winkel von 90° und können in nicht dargestellter Weise eine Höhenjustierung an einem der Füße aufweisen.

Nicht dargestellt ist bei diesem Ausführungsbeispiel gemäß Fig. 4 weiterhin, daß das Rohrprofil 34 alternativ auch an dem Gehäuse 23 in einen dort passend vorgesehenen Aufnahmestutzen lösbar befestigt sein kann, und daß auch der Fußbereich selbst als Stutzenabschnitt lösbar an dem Rohrprofil 34 befestigt sein kann. Weiterhin können statt des zentralen Rohrprofils 35 auch mehrere einzelne Rohrprofile 34 oder ein zentrales Rohrprofil mit einem größeren Durchmesser vorgesehen sein, in dem zugängliche Aufnahmekammern für den Einbau eines Kühlschranks oder die Aufnahme einer Gasflasche für eine Gasheizeinrichtung gebildet ist. Außerdem kann der Beinabschnitt auch eine Höheneinstelleinrichtung aufweisen, beispielsweise als Teleskop mit Positionsfeststellschraube ausgestaltet sein.

Die in den Fig. 2 und 3 deutlich erkennbare Heizeinrichtung 17 besteht aus länglichen rechteckigen Kupferplatten 36, die unmittelbar an der Unterseitenfläche 16 der Tischplatte 13 anliegen, wobei zwischen einzelnen Kupferplatten 36 ein Abstand von 1 bis 2 mm eingehalten ist. Die Kupferplatten 36 weisen weiterhin Bohrungen 37 auf, durch die Schraubbolzen 38 treten, welche auf die Unterseitenfläche 16 aufgeschossen sind und einen deutlich geringeren Durchmesser aufweisen als die Bohrungen 37, um die Kupferplatten 36 nicht an Wärmedehnungen zu hindern. In einer Ausnehmung 39 einer Kupferplatte 36 ist ein Thermostat 40 direkt auf die Unterseitenfläche 16 geschraubt, von dem eine Leitung 41 zum Regler 31 führt.

In Fig. 3 ist die Heizeinrichtung in drei verschiedenen Ebenen gezeigt. In dem diagonal verlaufenden Schnittsegment ist ein spiralförmiger Flachrohrheizkörper 42 besonders deutlich zu sehen, wobei die Bohrung 37 und die Schraubbolzen 38 in Spiralzwischenräumen 43 angeordnet sind. Im rechten Schnittsegment von Fig. 3 ist die Befestigung der Flachrohrheizkörper 42 zusammen mit den Kupferplatten 36 erkennbar, wobei stegförmige wärmeleitende Halteelemente in Form von massiven Stahlstäben 44 vorgesehen sind, die sich über mindestens zwei nebeneinander liegenden Abschnitte des Flachrohrheizkörpers 42 erstrecken und von einer Beilagscheibe 45 mit randseitiger Verformung sowie aufgeschraubter Mutter 46 gehalten werden.

In einem Segmentschnitt von Fig. 2 ist das Ende des Flachrohrheizkörpers 42 mit einem elektrischen Anschluß 47 gezeigt, von dem aus Leitungsdrähte 48 zum Regler 31 führen. Eine Stromversorgungsleitung 49 führt ebenfalls zum Regler 31 und verläuft bei dem Ausführungsbeispiel gemäß Fig. 4 vorzugsweise im Innern des Beinabschnitts 12.

Zum Betrieb des Tischaufbaus 10 wird von dem Regler 31 die gewünschte Gartemperatur eingestellt, beispielsweise 200° bis 220°. Der Thermostat 40 überwacht die Einhaltung der erreichten Temperatur und die Kontrolleuchten 32 und 33 informieren den Benutzer über das Vorliegen von Betriebsspannung und das Arbeiten des Thermostats 40.

Bei fortschreitender Erwärmung des mittleren Bereichs der Platte 13, an dem hängend die Heizeinrichtung 17 befestigt ist, kommt es zu einer Wärmedehnung an der Platte 13, die aufgrund der Einspannung des Randes 14 mittels des Rohres 15 nicht zu einer radialen Plattenvergrößerung oder welliger Verformung führt, sondern gezielt zur Bildung einer Mulde, deren Tiefe je nach Heiztemperatur etwa in der Größenordnung von 22 bis 25 mm gegenüber dem Plattenrandbereich beträgt. Der etwa 200° bis 220° heiße Muldenbereich erstreckt sich oberhalb der Heizeinrichtung und hat beispielsweise bei dem Ausführungsbeispiel gemäß Fig. 4 für einen Tischaufbau 10' bei einem runden Tisch 13' mit etwa 1 m Durchmesser eine Breite von etwa 40 cm. Radial an den Muldenbereich schließt dort sich ein zum Warmhalten von Speisen ringförmiger Übergangsbereich mit einer Breite von etwa 10 cm an, der vorteilhaft bei einer Temperatur von etwa 80° verwendet werden kann. Daran schließt sich dort radial ein Außen- bzw. Eßbereich mit einer Breite von ca. 20 bis 25 cm an, an dem Raumtemperatur herrscht, also etwa 20°C. Die einzelnen Zonen können durch Oberflächenbearbeitung oder ein- bzw. aufgebrachte Markierungen, auch gegebenenfalls mit farbigen Temperaturanzeigen und/oder Displays, versehen sein.

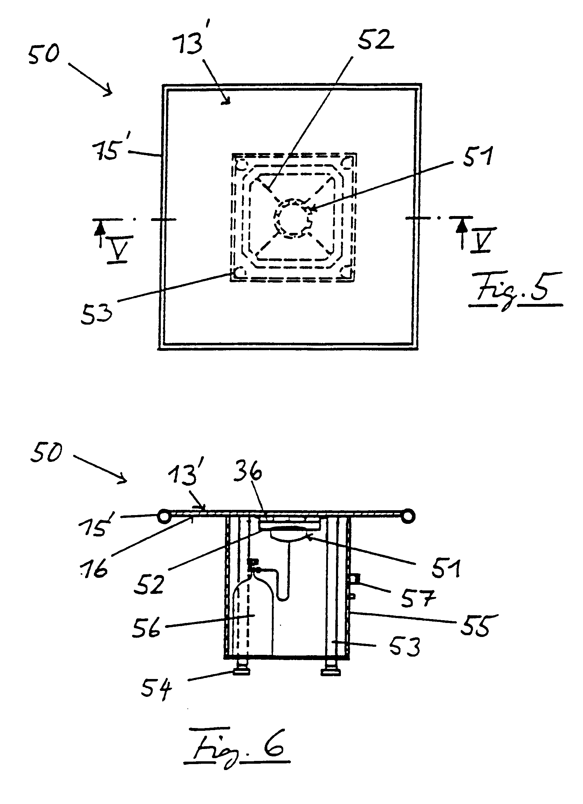

In den Fig. 5 und 6 ist ein weiteres Ausführungsbeispiel eines Tischaufbaus 50 in Draufsicht und teilschematisierter Schnittansicht gezeigt. Die Edelstahltischplatte 13' ist hier quadratisch ausgebildet und weist an ihrem Rand ebenfalls ein geschlossenes außermittig angeschweißtes Edelstahlrohr 15' auf.

Als Heizeinrichtung ist ein ringförmiger Gasbrenner 51 vorgesehen, der in einem Halter 52 beabstandet zu den auch hier vorgesehenen Kupferplatten 36 angeordnet ist. Der Halter 52 bildet ein Heizeinrichtungsgehäuse mit Lufteinlässen und ist in gleicher Weise wie beim ersten Ausführungsbeispiel eines Tischaufbaus 10' hängend an der Unterseite der Tischplatte 13' befestigt.

Außerhalb des Heizeinrichtungsgehäuses bzw. Halters 52 sind vier Beine 53 an der Unterseitenfläche 16 befestigt, die in höhenjustierbaren Füßen 54 münden. Umgeben sind die vier Beine 35 von einem Trägergehäuse 55, das einen Aufnahmeraum 58 für eine Gasflasche 56 und/oder einen nicht dargestellten Kühlschrank bildet. Bei 57 ist eine Eingangstür zu dem Aufnahmeraum 58 angedeutet.

Eine Thermostatsteuerung für die Gasheizung wurde zur Vereinfachung weggelassen. Der Betrieb des Tischaufbaus 50 erfolgt ähnlich wie beim Tischaufbau 10', nur mit Gas. Auch hier ergibt sich vorteilhaft eine muldenförmige Absenkung im mittleren Bereich der Tischplatte 13', und der Außenbereich der Tischplatte 13' ist ebenfalls wie bei dem Tischaufbau 10' gut für Eßplätze geeignet, da hier wegen der schlechten Wärmeleitung von Edelstahl keine unangenehme Erhitzung stattfindet.

Gemäß einer weiteren Ausgestaltung der Erfindung können der Beinabschnitt 12 und der Fußabschnitt 11 auch in Form eines zentralen Rohrs mit geringem Durchmesser ausgebildet sein, um den Tischaufbau in eine vorhandene Einstecköffnung auf Yachten, in Wohnmobilen und dergleichen verwenden zu können. Dieser modifizierte Fuß- und Beinabschnitt kann desweiteren auch mit einer Spitze versehen sein, um ihn in den Boden eindrücken zu können.

## Patentansprüche

1. Vorrichtung zum Garen und/oder Kochen, bestehend aus:
einer Stahlplatte (13), und aus
einer unterseitig an dieser angebrachten Heizeinrichtung (17; 51) für den mittleren Bereich der Stahlplatte (13), dadurch gekennzeichnet, daß die Stahlplatte aus Edelstahl besteht, wobei durch ein den Rand (14) der Edelstahlplatte (13) geschlossen umgebendes Edelstahlprofil eine wärmebedingte Ausdehnung der Edelstahlplatte (13) zur Bildung einer muldenartigen Verformung derselben kontrollierbar ist.

2. Vorrichtung nach Anspruch 1, dadurch gekennzeichnet, daß das randseitige Edelstahlprofil an der Edelstahlplatte (13) angeformt ist.

3. Vorrichtung nach Anspruch 2, dadurch gekennzeichnet, daß das randseitige Edelstahlprofil wenigstens eine einfache, gegebenenfalls gerundete Abkantung aufweist.

4. Vorrichtung nach Ansrpuch 1, dadurch gekennzeichnet, daß das randseitige Edelstahlprofil aus einem separaten Metallprofil (15) besteht, das an der Edelstahlplatte (13) befestigt ist.

5. Vorrichtung nach Anspruch 4, dadurch gekennzeichnet, daß das separate Edelstahlprofil (15, 15') mit einem geschlossenen Querschnitt ausgebildet ist.

6. Vorrichtung nach Anspruch 4 oder 5, dadurch gekennzeichnet, daß das Edelstahlprofil (15, 15') außermittig an den Rand (14) der Edelstahlplatte (13) angeschweißt ist.

7. Vorrichtung nach einem der vorangehenden Ansprüche, dadurch gekennzeichnet, daß als Heizeinrichtung eine Strahlungsquelle vorgesehen ist, die auf den vorzugsweise geschwärzten unterseitigen mittleren Bereich der Edelstahlplatte (13) gerichtet ist.

8. Vorrichtung nach einem der vorangehenden Ansprüche, dadurch gekennzeichnet, daß die Heizeinrichtung (17; 51) wenigstens ein wärmeverteilendes plattenförmiges Element (36), vorzugsweise aus Kupfer, aufweist, das bzw. die im mittleren Bereich der Edelstahlplatte (13) an deren Unterseite, vorzugsweise über aufgeschossene Schraubbolzen, befestigt ist/sind.

9. Vorrichtung nach einem der vorangehenden Ansprüche, dadurch gekennzeichnet, daß eine elektrische Heizeinrichtung (17) mit einem vorzugsweise spiralförmig angeordneten Flachrohrheizkörper (42) oder einer Heizfolie, einem Regler (31) und einem Thermostat (40) vorgesehen ist.

10. Vorrichtung nach Anspruch 9, dadurch gekennzeichnet, daß zur Befestigung des Flachrohrheizkörpers (42) auf die Edelstahlplatte (13) aufgeschossene Schraubbolzen (38) vorgesehen sind, die mit Spiel durch Bohrungen (37) des bzw. der plattenförmigen wärmeleitenden Elemente (36) und durch eine Abdeckplatte oder Halteelemente (44) greifen, die mit wenigstens einer Befestigungsmutter (46) beaufschlagt ist bzw. sind.

11. Vorrichtung nach Anspruch 9 oder 10, dadurch gekennzeichnet, daß die elektrische Heizeinrichtung (17) in einem an der Plattenunterseite befestigten Gehäuse (18) wärmeisoliert angeordnet ist.

12. Vorrichtung nach Anspruch 11, dadurch gekennzeichnet, daß das Heizeinrichtungsgehäuse (18) von einem an der Plattenunterseite befestigten Gehäuse (23) umgeben ist, an dem elektrische Steuer- und Kontrolleinrichtungen angeordnet sind.

13. Vorrichtung nach einem der Ansprüche 1 bis 8, dadurch gekennzeichnet, daß eine mit Gas arbeitende Heizeinrichtung (51) mit Regler und Thermostat vorgesehen ist.

14. Vorrichtung nach Anspruch 13, dadurch gekennzeichnet, daß die Gasheizeinrichtung einen zentralen und/oder ringförmigen Brenner (51) aufweist, der von den plattenförmigen wärmeleitenden Elementen (36) beabstandet an der Unterseite der Edelstahlplatte (13), vorzugsweise mittels aufgeschossener Schraubbolzen, befestigt ist.

15. Vorrichtung nach Anspruch 14, dadurch gekennzeichnet, daß die Gasheizeinrichtung (51) von einem stabilen, an der Unterseite (16) der Edelstahlplatte (13) befestigten Gehäuse (55) umgeben ist, an dem Steuer- und Kontrolleinrichtung angeordnet sind.

16. Vorrichtung nach einem der vorangehenden Ansprüche, dadurch gekennzeichnet, daß das randseitige Profil (15) eine axiale Haltefläche (60) für die Abstützung auf einer wenigstens abschnittsweise in einer passenden Aufnahmeöffnung einer größeren Platte gebildeten Schulter aufweist.

17. Vorrichtung nach einem der Ansprüche 1 bis 15, dadurch gekennzeichnet, daß an dem randseitigen Edelstahlprofil (15) ein umlaufendes Halteprofil (61) angeformt oder befestigt ist.

18. Vorrichtung nach Anspruch 13, dadurch gekennzeichnet, daß das Halteprofil (61) einen umlaufenden eingeformten Wulst oder eine eingeformte Rinne (62) und einen umlaufenden Halterand (63) für das randseitige Einhängen in eine passende Aufnahmeöffnung einer größeren Platte aufweist.

19. Vorrichtung nach einem der vorangehenden Ansprüche, dadurch gekennzeichnet, daß die Edelstahlplatte (13) mit Heizeinrichtung (17; 51) zu einem Tischaufbau zum geselligen Garen, Kochen und Essen gehört, wobei die Edelstahlplatte (13) eine Tischplatte (13') bildet und wobei ein Beinabschnitt (12) mit einem, vorzugsweise einteiligen massiven, Fußabschnitt (11), der bevorzugt wenigstens drei gleichmäßig voneinander beabstandete Füße (35) aufweist, in einem Bereich zwischen Plattenrand und Heizeinrichtungsrand an der Platte, vorzugsweise lösbar, befestigt ist.

20. Vorrichtung nach Anspruch 19, dadurch gekennzeichnet, daß auf der Tischplatte (13') Zonen verschiedener Temperatur gekennzeichnet sind.

21. Vorrichtung nach Anspruch 20, dadurch gekennzeichnet, daß auf der Tischplatte (13') eine zentrale Garzone, eine ringförmige Übergangszone und eine sich radial davon anschließende ringförmige Eßzone gebildet sind.

22. Vorrichtung nach Anspruch 20 oder 21, dadurch gekennzeichnet, daß für jede Zone eine Leuchtbandanzeige, eine Gradanzeige und eine Flüssigkristallanzeige, insbesondere für Temperaturkurven, vorgesehen ist.

23. Vorrichtung nach einem der Ansprüche 19 bis 22, dadurch gekennzeichnet, daß auf der Tischplatte (13') eine optische Anzeige für nicht mit der Temperatur zusammenhängende Informationen, wie Rezepte, Uhrzeit, Datum etc., vorgesehen ist.

24. Vorrichtung nach einem der Ansprüche 19 bis 23, dadurch gekennzeichnet, daß der Fußabschnitt (11) an einem plattenförmigen Abschnitt eines das Heizeinrichtungsgehäuse beabstandet umgebenden tragenden Gehäuses (55) angreift, der sich parallel zur Tischplatte (13) erstreckt.

25. Vorrichtung nach Anspruch 24, dadurch gekennzeichnet, daß der Beinabschnitt (12) wenigstens ein hohles Stützprofil (34; 53) aufweist, in dem vorzugsweise ein Aufnahmeraum (58), insbesondere für eine Gasflasche (56) und/oder einen integrierten Kühlschrank, gebildet ist.

26. Vorrichtung nach Anspruch 24 oder 25, dadurch gekennzeichnet, daß der Beinabschnitt (12) und/oder der Fußabschnitt, eine Höhenverstelleinrichtung besitzt.

27. Vorrichtung nach einem der Ansprüche 19 bis 26, dadurch gekennzeichnet, daß der Fußabschnitt (11) einen elektrischen Anschluß und/oder einen Gasanschluß aufweist.

28. Vorrichtung nach einem Ansprüche 19 bis 27, dadurch gekennzeichnet, daß zu dem Tischaufbau (10; 50) eine elektrische Abzugshaube gehört, die sich wenigstens über den mittleren Bereich der Tischplatte (13') erstreckt.

29. Vorrichtung nach Anspruch 28, dadurch gekennzeichnet, daß die Abzugshaube für Umluftbetrieb mit einem Lufteinlaß mit Filter und einem oberseitigen Luftauslaß und für den Abluftbetrieb mit einem oberseitigen Rohrstutzen für einen Abluftschlauch oder dergleichen versehen ist.

## Claims

1. Rosting and cooking device comprising:
a steel plate (13) and
a heating device on its bottom side (17; 15) for the central area of the steel plate (13),
characterized in that
the steel plate (13) is made of stainless steel, a heat-related dilation of the stainless steel plate (13) for creating a trough-shaped deformation being controllable by a closed fine or stainless steel profile surrounding the edge (14) of the fine or stainless steel plate (13).

2. Device according to claim 1,
characterized by
the edge-side fine steel profile being fitted to the fine steel plate (13).

3. Device according to claim 2,
characterized by
the edge-side fine steel profile having at least one possible rounded beveled edge.

4. Device according to claim 1,
characterized by
the edge-side fine steel profile consisting of a separate metal profile (15) mounted to the steel plate (13).

5. Device according to claim 4,
characterized by
the separate fine steel profile (15, 15') having a closed diameter.

6. Device according to claim 4 or 5,
characterized by
the fine steel profile (15, 15') being welded off center to the edge (14) of the fine steel plate (13).

7. Device according to one of the foregoing claims,
characterized by
a radiation source being used as heating device which preferably is pointed towards the central area of the fine steel plate (13).

8. Device according to one of the foregoing claims,
characterized by
the heating device (17; 51) having at least one heat-conducting plate shaped element (36), preferably made of copper that is/are preferably mounted in the central area of fine steel plate (13) to its bottom side by shot screw bolts.

9. Device according to one of the foregoing claims,
characterized by
the heating device (17) being provided preferably with a flat pipe radiator (42) arranged in spiral shape or with a heating foil, a controller (31) and a thermostat (40).

10. Device according to claim 9,
characterized by
shot screw bolts (38) being provided as mounting of the flat pipe radiator (42) to fine steel plate (13) which grip with some play through drill holes (37) of the plate shaped heat-conducting element(s) (36) and through a cover plate or holding elements (44) which is/are admitted with at least one mounting nut (46).

11. Device according to claim 9 or 10,
characterized by
the electrical heating device (17) being placed with heat insulation in a housing (18) mounted to the bottom side of the plate.

12. Device according to claim 11,
characterized by
the heating device housing (18) being surrounded by a housing (23) mounted to the bottom side of the plate equipped with electrical control devices.

13. Device according to claims 1 to 8,
characterized by
a control and thermostat being provided for the gasoperated heating device (51).

14. Device according to claim 13,
characterized by
the gas heating device having a central and/or circular burner (51) which is mounted with intermediate spaces to the plate-shaped heat-conducting elements (36) to the bottom side of fine steel plate (13), preferably by shot screw bolts.

15. Device according to claim 14,
characterized by
the gas heating device (51) being surrounded by a stable housing (55) mounted to the bottom side (16) of fine steel plate (13) equipped with control devices.

16. Device according to one of the foregoing claims,
characterized by
the edge-side profile (15) having an axial support area (60) for support on a shoulder formed at least sectionally in a suitable reception chamber of a larger plate.

17. Device according to claims 1 to 15,
characterized by
an circular holding profile (61) being fitted or mounted to the edge-side fine steel profile (15).

18. Device according to claim 13,
characterized by
holding profile (61) having a circular trimmed-in elevation or a trimmed-in ditch (62) and a circular holding edge (63) for edge-side hanging into a suitable reception opening of a larger plate.

19. Device according to one of the foregoing claims,
characterized by
the fine steel plate (13) with heating device (15; 51) belonging to a table construction for sociable gathering for cooking and dining with the fine steel plate (13) forming a tabletop (13') and a leg section (12) being mounted preferably as detachable device with one preferably one-part massive foot section (11) that has at least three feet (51) arranged with equal intermediate spaces to the plate in an area between the plate edge and the heating device wall.

20. Device according to claim 19,
characterized by
different temperature zones being marked on tabletop (13').

21. Device according to claim 20,
characterized by
tabletop (13') having a central cooking zone, a circular transition zone and a radially adjoining circular eating zone.

22. Device according to claim 20 or 21,
characterized by
a LED display, a temperature display and a liquid crystal display, especially for temperature curves, are provided for each zone.

23. Device according to claims 19 to 22,
characterized by
an optical display for non-temperature related information such as recipes, time, date etc. being provided on tabletop (13').

24. Device according to claims 19 to 23,
characterized by
foot section (11) adjoining at a plate-shaped section of a support housing (55) surrounding the heating device housing with intermediate space which extends parallel to tabletop (13).

25. Device according to claim 24,
characterized by
the leg section (12) having at least one hollow support profile (34; 53) in which preferably a reception chamber (58) especially for a gas bottle (56) and/or an integrated refrigerator is created.

26. Device according to claim 24 or 25,
characterized by
leg section (12) and/or foot section being equipped with a height adjustment control.

27. Device according to claims 19 to 26,
characterized by
the foot section (11) being equipped with an electrical connection and/or a gas connection.

28. Device according to claims 19 to 27,
characterized by
an electrical fan belonging to tabletop (10; 50) which extends over at least the central area of tabletop (13).

29. Device according to claim 28,
characterized by
an electrical fan designed for circulated-air operation equipped with a filter and top-side air valve and a short piece of pipe for a vent during exhaust-air operation or the like.

## Revendications

1. Dispositif pour la cuisson et/ou la cuisine, comprenant une plaque d'acier (13) et un appareil de chauffage (17 ; 51) disposé sur la face inférieure de celle-ci pour la zone centrale de la plaque d'acier (13), caractérisé en ce que la plaque d'acier est en acier spécial, une dilatation thermique de la plaque en acier spécial (13) pouvant être contrôlée pour former une déformation en auge de celle-ci au moyen d'un profilé en acier spécial enveloppant de façon fermée le bord (14) de la plaque en acier spécial (13).

2. Dispositif selon la revendication 1, caractérisé en ce que le profilé en acier spécial côté bord est formé sur la plaque en acier spécial (13).

3. Dispositif selon la revendication 2, caractérisé en ce que le profilé en acier spécial côté bord présente au moins un chanfrein simple, éventuellement arrondi.

4. Dispositif selon la revendication 1, caractérisé en ce que le profilé en acier spécial côté bord est à base d'un profilé métallique (15) séparé qui est fixé sur la plaque en acier spécial (13).

5. Dispositif selon la revendication 4, caractérisé en ce que le profilé séparé en acier spécial (15, 15') est réalisé avec une section fermée.

6. Dispositif selon la revendication 4 ou 5, caractérisé en ce que le profilé en acier spécial (15, 15') est soudé de façon excentrique sur le bord (14) de la plaque en acier spécial (13).

7. Dispositif selon l'une quelconque des revendications précédentes, caractérisé en ce qu'il est prévu comme appareil de chauffage une source de rayonnement qui est axée sur la zone centrale inférieure, de préférence noircie, de la plaque en acier spécial (13).

8. Dispositif selon l'une quelconque des revendications, caractérisé en ce que l'appareil de chauffage (17 ; 51) présente au moins un élément (36) en forme de plaque, diffusant de la chaleur, de préférence en cuivre, qui est (sont) fixé(s) dans la zone centrale de la plaque en acier spécial (13) sur sa face inférieure, de préférence au moyen de boulons filetés allongés.

9. Dispositif selon l'une quelconque des revendications précédentes, caractérisé en ce qu'un appareil de chauffage (17) électrique est prévu avec un radiateur à tubes aplatis (42) disposé de préférence en forme de spirale ou une feuille de chauffage, un régulateur (31) et un thermostat (40).

10. Dispositif selon la revendication 9, caractérisé en ce que, pour la fixation du radiateur à tubes aplatis (42) sur la plaque en acier spécial (13), on prévoit des boulons filetés (38) allongés qui passent avec du jeu dans des alésages (37) de l'élément ou des éléments (36) thermoconducteurs en forme de plaques et dans une plaque de recouvrement ou des éléments de support (44) qui est (sont) pourvu(s) d'au moins un écrou de fixation (46).

11. Dispositif selon la revendication 9 ou 10, caractérisé en ce que l'appareil de chauffage électrique (17) est disposé et calorifugé dans un boîtier (18) fixé sur la face inférieure de la plaque.

12. Dispositif selon la revendication 11, caractérisé en ce que le boîtier de l'appareil de chauffage (18) est entouré d'un boîtier (23) fixé sur la face inférieure de la plaque sur lequel sont disposés des appareils électriques de commande et de contrôle.

13. Dispositif selon l'une quelconque des revendications 1 à 8, caractérisé en ce qu'il est prévu un appareil de chauffage (51) fonctionnant au gaz avec régulateur et thermostat.

14. Dispositif selon la revendication 13, caractérisé en ce que l'appareil de chauffage au gaz présente un brüleur (51) central et/ou de forme annulaire qui est fixé à distance des éléments (36) thermoconducteurs en forme de plaques sur la face inférieure de la plaque en acier spécial (13), de préférence au moyen de boulons filetés allongés.

15. Dispositif selon la revendication 14, caractérisé en ce que l'appareil de chauffage au gaz (51) est entouré d'un boîtier (55) stable et fixé sur la face inférieure (16) de la plaque en acier spécial, sur lequel sont disposés l'appareil de commande et l'appareil de contrôle.

16. Dispositif selon l'une quelconque des revendications précédentes, caractérisé en ce que le profilé (15) côté bord présente une surface de support (60) axiale pour l'appui sur un épaulement formé au moins par endroits dans un orifice de logement adapté d'une plaque assez grande.

17. Dispositif selon l'une quelconque des revendications 1 à 15, caractérisé en ce qu'un profilé de support (61) périphérique est formé ou fixé sur le profilé en acier spécial (15) côté bord.

18. Dispositif selon la revendication 13, caractérisé en ce que le profilé de support (61) présente un renflement moulé périphérique ou une rigole (62) moulée et un bord de support (63) périphérique pour l'accrochage côté bord dans un orifice de logement adapté d'une plaque assez grande.

19. Dispositif selon l'une quelconque des revendications précédentes, caractérisé en ce que la plaque en acier spécial (13) avec appareil de chauffage (17 ; 51) fait partie d'une structure de table pour cuire, cuisiner et manger avec d'autres personnes, la plaque en acier spécial (13) formant un plateau de table (13') et une partie de montant (12) avec une partie de pied (11) massive, de préférence d'un seul tenant, qui présente de préférence au moins trois pieds (35) régulièrement espacés les uns des autres, étant fixée, de préférence amovible, dans une zone entre le bord de la plaque et le bord de l'appareil de chauffage sur la plaque.

20. Dispositif selon la revendication 19, caractérisé en ce que des zones de température différente sont repérées sur le plateau de table (13').

21. Dispositif selon la revendication 20, caractérisé en ce que sur le plateau de table (13') sont formées une zone de cuisson centrale, une zone de transition de forme annulaire et une zone pour manger. se raccordant radialement et de forme annulaire.

22. Dispositif selon la revendication 20 ou 21, caractérisé en ce que, pour chaque zone, il est prévu un affichage par bande lumineuse, un affichage des degrés et un affichage à cristaux liquides, en particulier pour les courbes de température.

23. Dispositif selon l'une quelconque des revendications 19 à 22, caractérisé en ce que, sur le plateau de table (13'), il est prévu une visualisation pour des informations qui ne sont pas en rapport avec la température telles que recettes, heure, date, etc.

24. Dispositif selon l'une quelconque des revendications 19 à 23, caractérisé en ce que la partie de pied (11) est appliquée sur une partie, en forme de plaque, d'un boîtier (55) porteur, entourant à distance le boîtier de l'appareil de chauffage, qui s'étend parallèlement au plateau de table.

25. Dispositif selon la revendication 24, caractérisé en ce que la partie de montant (12) présente au moins un profilé d'appui (34 ; 53) creux dans lequel est formé de préférence un logement de réception (58), en particulier pour une bouteille de gaz (56) et/ou un réfrigérateur intégré.

26. Dispositif selon la revendication 24 ou 25, caractérisé en ce que la partie de montant (12) et/ou la partie de pied a un système de réglage en hauteur.

27. Dispositif selon l'une quelconque des revendications 19 à 26, caractérisé en ce que la partie de pied (11) présente un branchement électrique et/ou un branchement de gaz.

28. Dispositif selon l'une quelconque des revendications 19 à 27, caractérisé en ce que la structure de table (10; 50) comprend une hotte d'extraction électrique qui s'étend au moins sur la plage centrale du plateau de table (13').

29. Dispositif selon la revendication 28, caractérisé en ce que la hotte d'extraction est équipée d'une entrée d'air avec filtre et d'une sortie d'air sur le dessus pour la circulation d'air et d'une tubulure sur le dessus pour un tuyau souple d'évacuation d'air ou similaire pour l'évacuation d'air.
